# EUROPEAN PATENT SPECIFICATION

(11) **EP 3 890 099 B1**
(45) Date of publication and mention of the grant of the patent: **23.03.2022**
(21) Application number: 20166991.8
(22) Date of filing: 31.03.2020
(51) Int. Cl.: H01M 10/613, H01M 10/625, H01M 10/647, H01M 10/6552, H01M 10/6557

(54) **ROBUST INTERFACE FOR COOLER TO HOUSING**
ROBUSTE SCHNITTSTELLE FÜR EINEN KÜHLER ZUM GEHÄUSE
INTERFACE ROBUSTE ENTRE BOÎTIER ET REFROIDISSEUR

(43) Date of publication of application: 06.10.2021
(73) Proprietor: Samsung SDI Co., Ltd., Gyeonggi-do 17084 (KR)
(72) Inventor: Rath, Helmut, 8481 St. Veits / Südstmk. (AT)
(74) Representative: Gulde & Partner

(56) References cited:
- WO-A1-2012/117697
- KR-A- 20130 113 740
- US-A1- 2018 123 195

## Description

### Field of the Invention

The present invention relates to a liquid cooling interface system connecting a coolant supply or a coolant discharge to a cooling system for a battery cell or battery module, and particular to a liquid cooling interface system that enables a mechanical decoupling of external forces exerted on the cooling interface system and the inner cooling pipes inside the housing of a battery cell or battery module. The present invention further relates to a housing for a battery cell or a battery module, comprising the cooling interface system according to the invention.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator. Furthermore, the vehicle may include a combination of electric motor and conventional combustion engine. In general, an electric-vehicle battery (EVB) or traction battery is a battery used to power the propulsion of battery electric vehicles (BEVs). Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled in series and/or in parallel so as to provide a high energy density, in particular for motor driving of a hybrid vehicle. That is, the battery module is formed by interconnecting the electrode terminals of the plurality of unit battery cells depending on a required amount of power and in order to realize a high-power rechargeable battery.

A battery pack is a set of any number of (preferably identical) battery modules. They may be configured in a series, parallel or a mixture of both to deliver the desired voltage, capacity, or power density. Components of battery packs include the individual battery modules, and the interconnects, which provide electrical conductivity between them.

The mechanical integration of such a battery pack requires appropriate mechanical connections between the individual components, e. g. of battery modules, and between them and a supporting structure of the vehicle. These connections must remain functional and save during the average service life of the battery system. Further, installation space and interchangeability requirements must be met, especially in mobile applications.

Mechanical integration of battery modules may be achieved by providing a carrier framework and by positioning the battery modules thereon. Fixing the battery cells or battery modules may be achieved by fitted depressions in the framework or by mechanical interconnectors such as bolts or screws. Alternatively, the battery modules are confined by fastening side plates to lateral sides of the carrier framework. Further, cover plates may be fixed atop and below the battery modules.

The carrier framework of the battery pack is mounted to a carrying structure of the vehicle. In case the battery pack shall be fixed at a bottom of the vehicle, the mechanical connection may be established from the bottom side by for example bolts passing through the carrier framework of the battery pack. The framework is usually made of aluminum or an aluminum alloy to lower the total weight of the construction.

Battery systems according to the prior art, despite any modular structure, usually comprise a battery housing that serves as enclosure to seal the battery system against the environment and provides structural protection of the battery system's components. Housed battery systems are usually mounted as a whole into their application environment, e.g. an electric vehicle. Thus, the replacement of defect system parts, e. g. a defect battery submodule, requires dismounting the whole battery system and removal of its housing first. Even defects of small and/or cheap system parts might then lead to dismounting and replacement of the complete battery system and its separate repair. As high-capacity battery systems are expensive, large and heavy, said procedure proves burdensome and the storage, e.g. in the mechanic's workshop, of the bulky battery systems becomes difficult.

To provide thermal control of the battery pack a thermal management system is required to safely use the at least one battery module by efficiently emitting, discharging and/or dissipating heat generated from its rechargeable batteries. If the heat emission/discharge/dissipation is not sufficiently performed, temperature deviations occur between respective battery cells, such that the at least one battery module cannot generate a desired amount of power. In addition, an increase of the internal temperature can lead to abnormal reactions occurring therein and thus charging and discharging performance of the rechargeable deteriorates and the life-span of the rechargeable battery is shortened. Thus, cell cooling for effectively emitting/discharging/ dissipating heat from the cells is required.

To supply the cooling system for a battery cell or battery module with a liquid coolant, or to discharge the consumed coolant from the cooling system, interfaces are employed that are integrated into a wall of a housing for the battery cell or battery module. These interfaces are adapted for connecting external (i. e., outside the housing) pipes or hoses for coolant supply or discharge with the pipes or hoses being, at least partially, inside the housing as part of the cooling system. Specifically, the interface integrated into the wall of the housing is connectable, from outside the housing, with external hoses or pipes for coolant supply or discharge, and is further connectable, inside the housing, with internal pipes or hoses that are part of the cooling system.

However, state-of-the-art designs of liquid cooling interfaces have the disadvantage that external mechanical forces being exerted on the interface, e. g., hits, crushes, or pressure of components arranged adjacent to the housing of the battery cell or battery module in the vehicle, are transmitted to the internal pipes of the cooling system, increasing the risk of damage or destruction of the battery cell's or battery module's cooling system. More specifically, state-of-the-art designs of liquid cooling interfaces provide no combination of mechanical decoupling together with the profit of positive substance jointing (e. g., welding or brazing) inside of the electrical space of a housing of a battery cell or battery module.

It is thus an object of the present invention to overcome or reduce at least some of the drawbacks of the prior art and to provide a cooling interface system that allows for a mechanical decoupling of the cooling interface and the components of the cooling system integrated in the battery cell or battery module.

KR 2013 0113 740 A relates to a refrigerant manifold for a battery, which is connected to a refrigerant pipe of cooling plates for individually cooling multi-layered battery plates and distributes the refrigerant to the cooling plates individually through the refrigerant pipe. A body has a hollow body having a distribution port communicating with the inflow space and connected to the refrigerant tubes of the cooling plates, respectively. The one side of the inflow space is opened. A cover is integrally fixed to the main body and shields one side of the inflow space and has an inflow pipe for introducing the refrigerant into the inflow space. A connector is installed at a distribution port of the main body and is penetrating the refrigerant pipe in an adhered state to connect the refrigerant pipe so as to allow the refrigerant pipe to be water-tightly connected to the distribution port.

### Summary of Invention

Embodiments of the present disclosure seek to solve at least one of the problems existing in the prior art to at least some extent. In particular, a cooling interface system as disclosed in claim 1 (in the following also shortly referred to as "interface system") for a mechanical decoupling of a coolant interface (hereinafter also referred to as "interface body") and a cooling pipe and/or cooling system of a battery cell or battery module for a vehicle is provided, the interface system comprising a housing for a battery cell or a battery module, an inset having a first side and a second side opposite to the first side, and an interface body having a first end and a second end and further having a bore-hole with a first opening on the first end and a second opening on the second end. The housing comprises a part having a hole. The inset comprises a recess in the second side to receive the interface body. The interface body is at least partially insertable into the inset such that, when the interface body is inserted into the inset, the first end of the interface body is located in the recess of the inset. The inset is at least partially insertable, into the part through the hole such that, when the inset is inserted into the part, the first side of the inset is located inside the housing. The first side of the inset comprises a hole allowing access, from the first side of the inset, to the first opening of the bore-hole of the interface body when the interface body is inserted into the inset. The first opening of the bore-hole through the interface body is adapted to receive, in a slidable manner, an inlet of the cooling pipe and the second opening of the bore-hole through the interface body is connectable, in a fluid-tight manner, with a cooling supply or cooling discharge, e. g., a pipe or a hose.

For the invention, it is irrelevant, whether the part of the housing for the battery cell or battery module is a component of the housing that is separable from the remainder of the housing or whether the part of the housing is formed integrally with the remainder of the invention. Thus, in embodiments of the invention, the interface system comprises a part of the housing being separable from the remainder of the housing. According to alternative embodiments of the invention, the interface system comprises the complete housing for a battery cell or battery module, wherein the housing has a part being integrally formed with the remainder of the housing.

In one embodiment of the interface system according to the invention, the inset is inserted into the hole of the part of the housing, and wherein the interface body is inserted into the inset.

In one embodiment of the interface system, the inlet of the cooling pipe is led through the hole in the first side of the inset and at least partially inserted, in a slidable manner, into the first opening of the bore-hole through the interface body.

In one embodiment of the interface system, a seal is arranged between the inner surface of the hole in the first side of the inset and the outer surface of the inlet.

In one embodiment of the interface system, the seal is an elastic seal or a cohesive seal.

In one embodiment of the interface system, at least one drain channel is formed between the inset and the interface body. The drain channel may lead from the first opening of the bore-hole of the interface body to the outside of the housing.

In one embodiment of the interface system, the inset and the housing are adapted such that in a state, wherein the inset is not fixed to the housing, the inset is moveable relative to the housing from the outside of the housing through the hole of the housing into the inside of the housing.

In one embodiment of the interface system, the inset comprises a seal abutting against an outer side of the housing, when the inset is inserted into the hole of the part of the housing.

In one embodiment of the interface system, the inset is fixable to the part of the housing. For example, screws can be used to fix the inset to the part of the housing.

In one embodiment of the interface system, the inset comprises a first collar, wherein the first collar abuts, when the inset is inserted into the hole of the part of the housing, against the outside wall of the part of the housing. The first collar facilitates the fixation of the inset to the housing.

In one embodiment of the interface system, the interface body is fixable to the inset.

In one embodiment of the interface system, the interface body is fixable to the part of the housing. For example, screws can be used to fix the interface body to the part of the housing.

In one embodiment of the interface system, the interface body comprises a second collar, wherein the second collar abuts, when the interface body is inserted into the inset being inserted into the hole of the part of the housing, against the outside wall of the part of the housing and/or against the first collar of the inset.

In one embodiment of the interface system, the interface body and the inset are both fixable to the part of the housing by the same fixing elements. The fixing elements may be screws.

A further aspect of the invention relates to a battery system comprises the interface system according to the invention.

Further aspects of the present invention could be learned from the dependent claims or the following description.

In particular, embodiments of the invention comprise the following advantages with respect to the state of the art:
- Mechanical decoupling of external forces on the coolant-interface to the inner cooling pipes.
- Tolerance compensation - radially and axially - between cooling system / cooling pipe and housing.
- Only "positive substance jointing" in the electrical space.
- An additional coolant-seal outside of the seal between the internal coolant pipe and inset of the interface system.
- A coolant drainage channel to detect a damaged coolant-seal and to keep away the coolant-pressure from the seal between the internal coolant pipe and inset of the interface system.
- A damaged coolant-seal can be replaced without opening of electrical space.
- The interface system according to the invention comprises improved robustness in regards of coolant leakage inside the battery housing in comparison to the state of the art.

### Brief Description of the Drawings

Features will become apparent to those of ordinary skill in the art by describing in detail exemplary embodiments with reference to the attached drawings in which:
- Fig. 1: is a longitudinal sectional view through a housing comprising a battery cell, a cooling system, and a cooling interface system according to an embodiment of the invention;
- Fig. 2: shows, as a detailed isometric view, a part of a side wall of the housing with two interface systems according to an embodiment of the invention;
- Fig. 3: shows a detail of a front view of the side wall of the housing, wherein embodiments of the interface system according to the invention are integrated; and
- Fig. 4: illustrates the nested assembly of one embodiment of the interface system according to the invention.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. As used herein, the term "and/or" includes any and all combinations of one or more of the associated listed items. Further, the use of "may" when describing embodiments of the present invention refers to "one or more embodiments of the present invention."

In the following description of embodiments of the present invention, the terms of a singular form may include plural forms unless the context clearly indicates otherwise.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Features of the inventive concept and methods of accomplishing the same may be understood more readily by reference to the following detailed description of embodiments and the accompanying drawings. Hereinafter, example embodiments will be described in more detail with reference to the accompanying drawings, in which like reference numbers refer to like elements throughout. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art. Accordingly, processes, elements, and techniques that are not necessary to those having ordinary skill in the art for a complete understanding of the aspects and features of the present invention may not be described. Unless otherwise noted, like reference numerals denote like elements throughout the attached drawings and the written description, and thus, descriptions thereof will not be repeated. In the drawings, the relative sizes of elements, layers, and regions may be exaggerated for clarity.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present invention.

Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly.

It will be understood that when an element or layer is referred to as being "on," "connected to," or "coupled to" another element or layer, it can be directly on, connected to, or coupled to the other element or layer, or one or more intervening elements or layers may be present. In addition, it will also be understood that when an element or layer is referred to as being "between" two elements or layers, it can be the only element or layer between the two elements or layers, or one or more intervening elements or layers may also be present.

The terminology used herein is for the purpose of describing particular embodiments only and is not intended to be limiting of the present invention. As used herein, the singular forms "a," "an," and "the" are intended to include the plural forms as well, unless the context clearly indicates otherwise. It will be further understood that the terms "comprises," "comprising," "includes," and "including," when used in this specification, specify the presence of the stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value. Further, the use of "may" when describing embodiments of the present invention refers to "one or more embodiments of the present invention."

Unless otherwise defined, all terms (including technical and scientific terms) used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

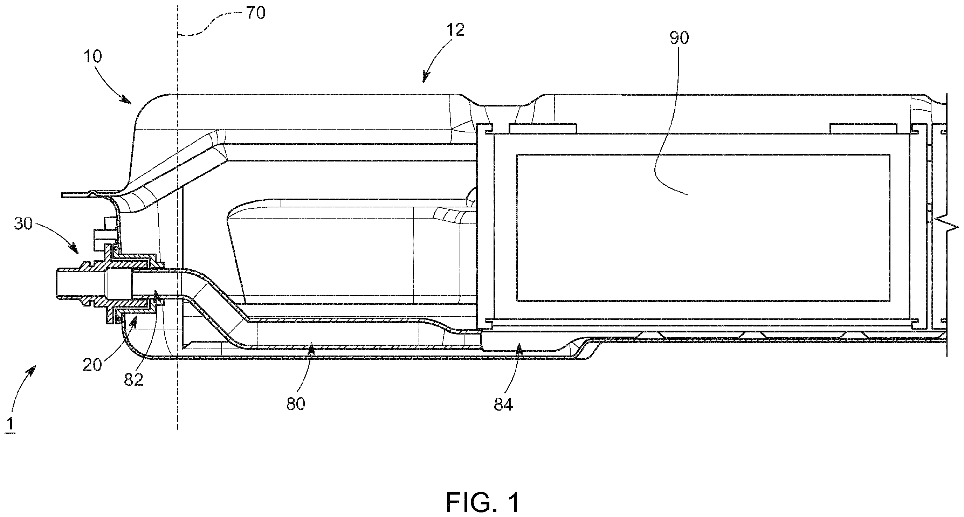

Figure 1 is a longitudinal sectional view through a housing 12 comprising a battery cell 90, a cooling system 84, and a cooling interface system 1 according to an embodiment of the invention. Fig. 1 illustrates, how the cooling interface system 1 is used and connected to the cooling system 84 of the battery cell 90. The interface system 1 comprises a part 10 of the housing 12, for example a side wall of a bottom housing of the housing 12 (the part in the figure being depicted on the left side of dashed line 70). The part 10 is that part of the housing being configured for connecting a coolant supply and/or a coolant discharge (not shown), e. g., an extemal pipe or hose, to the internal cooling system 84. The cooling system 84 is arranged below and adjacent to the battery cell 90. Hence, heat dissipation is enabled from the battery cell 90 to a liquid coolant streaming through the cooling system 84.

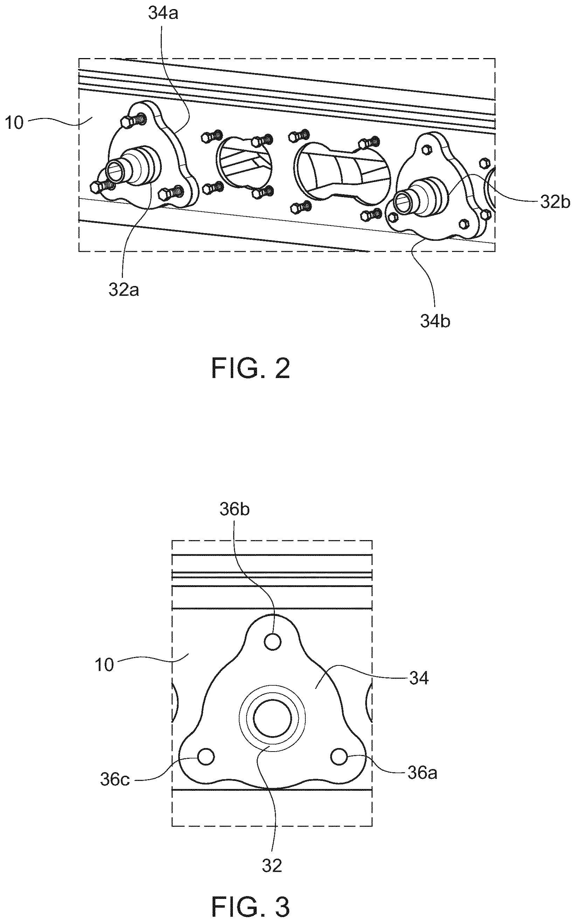

To supply coolant to the coolant system 84 and to discharge consumed coolant from the cooling system 84, the cooling system 84 must be connected to an external coolant supply and an external coolant discharge (not shown). To that end, the cooling system 84 is connected, inside the housing, with a cooling interface system 1 via a cooling pipe 80. The cooling pipe 80 may be used for coolant supply or for coolant discharge. As usually, of course, both, a coolant supply as well as a coolant discharge, are necessary for the cooling system 84 to work, the part 10 of the housing is preferably equipped with two cooling interface systems according to the invention (cf. Fig. 2); only one of them is shown in Fig. 1.

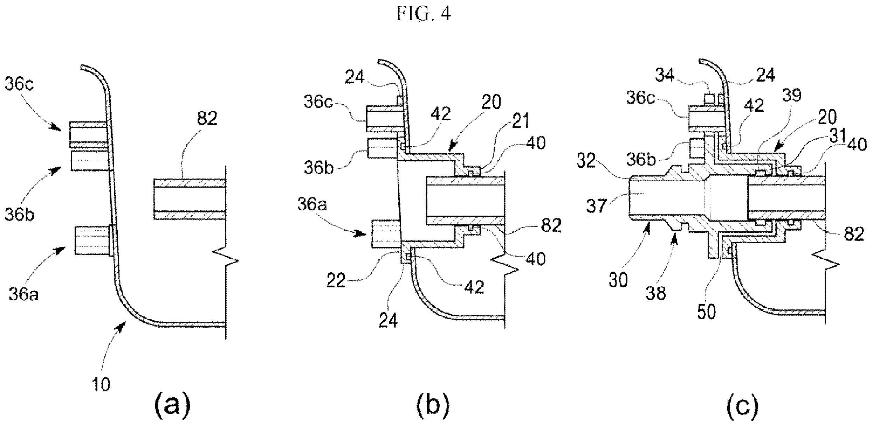

As shown in Fig. 1, the cooling interface system 1 is arranged in the wall of the part 10 of the housing, and comprises an inset 20 and an interface body 30. The inset 20 is inserted, partially, into a hole in the wall of the part 10 of the housing 12. The interface body 30 is partially inserted, in turn, into the inset 20 and protrudes with one end from the part 10 of the housing to the outside of the housing. The nested arrangement of the components of the cooling interface system will be described more detailed below with the help of Figures 4 (a) to (c).

The inset 20 and the interface body 30 may each be plastic injection molded components with additional sealing elements. The cooling pipe 80 including the inlet 82 and a cooling system 84 including a cooling plate may be a single component. The material of the cooling pipe 80 and cooling system 84 may be aluminum or stainless steel, and they may be joined together with brazing or welding. This joining technology is a positive substance jointing. It has improved robustness compared to non-cohesive connections such as gluing or a hoseclip connection. The length of the cooling pipe 80 in Fig. 1 is only exemplary and may be shorter or longer than depicted.

An enlarged view of the assembly shown in Fig. 1 on the left side of dashed line 70 is shown in Fig. 4 (c). As shown in Figs. 1 and 4 (a) to (c), a portion of the inlet 82 of the cooling pipe 80 is inserted, through a hole in the first side 21 of the inset 20 facing the inside of the housing 12, into a bore-hole 37 comprised in the interface body 30. In particular, the inlet 82 of the cooling pipe 80 is arranged slidably in the hole in the first side 21 of inset 20, and is also subsequently inserted into a hole in the first end 31 of interface body 30 so as to be slidably arranged in at least a part of the bore-hole 37 of the interface body 30. In particular, the inlet 82 of the cooling pipe 80 can slide back and forth by a certain scope inside the at least a part of the bore-hole 37 along a longitudinal center axis of the bore-hole 37 or, vice-versa, the interface-body 30 can slide relative to the inlet 82 being bedded, at least partially, within the inside of bore-hole 37 of the interface body 30. Accordingly, even when the interface body 30 is moved along the direction of its longitudinal center axis, e. g., due to a certain force acting on the interface body 30 from outside (or also from inside) the housing 12 of the battery cell, the movement is not conveyed or transferred to the inlet 82 of the cooling pipe 80, or at least, such a movement of the interface body's 30 move is not completely conveyed or transferred to the inlet 82.

Hence, hits, pushes, or crushes against the interface body 30 are also not transferred to the cooling pipe 80 or the cooling system 84 connected with the cooling pipe 80. Damage of the cooling pipe 80 or the cooling system 84 is thus avoided.

As the interface body 30 is nested into the inset 20 (see Fig. 4), a hole in the side of inset 20 facing the interior of the housing (i. e., through a first side of inset 20; see Fig. 4). The inlet 82 of the cooling pipe 80 is then passed or led through the hole in the first side of inset 20 into the bore-hole 37 of interface body 30. The hole in the first side of inset 20 encompasses or embraces the inlet 82 of the cooling pipe 80. In order to prevent a leakage of coolant out of the interface body 30 along the inner surface of the bore-hole 37 surrounding the inlet 82, a seal 40 may be arranged between the inner surface of the hole in the first side of inset 20 and the outer surface of the inlet 82. However, in order to prevent leakage of coolant out of the interface body 30 into the interior of the housing, e. g., in case of a deteriorated or degenerated seal 40, a drain channel 50 may be provided, wherein the drain channel 50 leads from the inner surface of bore-hole 37 surrounding the inlet 82 to the outside of the part 10 of the housing. In embodiments of the interface system 1 according to the invention, more than one drain channels 50 as described before can be implemented into the interface system 1.

Figure 2 shows, as a detailed isometric view, a part of the part 10 of the housing 12 with two interface systems according to an embodiment of the invention. A first interface system is visible on the left side of the shown section of the part 10 of the housing. The first interface system may act as a coolant supply for the battery cell's 90 cooling system 84. Visible from outside the housing 12 are the second end 32a and a collar 34a of the interface body of the first interface system. The second end 32a of the interface body of the first interface system is adapted for being connected with an external coolant supply, e. g., pipe or hose. The collar 34a of the interface body of the first interface system abuts against the outer wall of the part 10 of the housing and facilitates the fixation of the interface body on the part 10 (see also Fig. 3). A second interface system is visible on the right side of the shown section of the part 10 of the housing 12. The second interface system may act as a coolant discharge for the battery cell's 90 cooling system 84. The arrangement of the second interface system within the part 10 of the housing is similar to that described before as to the first interface system.

Figure 3 shows a detail of a front view of the part 10 of the housing 12, wherein embodiments of the interface system 1 according to the invention are integrated. Visible are those parts of the interface body 30 of an interface system 1 according to the invention that are outside the part 10 of the housing, when the interface system 1 is arranged into the wall of the part 10. Specifically, a second end 32 of the interface body 30 protrudes from the part 10, wherein the second end 32 is adapted to be connected to an external hose or pipe that supplies or discharges coolant. The interface body 30 also comprises a collar 34, with which the interface body 30 can be fixated to the outer side of the part 10 of the housing. The collar 34 may comprise a number of through-holes, e. g., three through-holes, through which fixing elements 36a, 36b, 36c, e. g., screws, may be passed so as to attach the collar 34 to the part 10 of the housing.

The sequence of an assembly of one embodiment of the interface system 1 according to the invention is shown in Figures 4 (a) to (c). All inner components (i. e., the components in the interior of housing 12 after integration of the cooling interface system 1 into the housing of the battery) are assembled first (e. g. cooler, cells, electric, etc.). The inset 20 will be put from the outside of the housing 12 through a hole in a part 10 of the housing 12 and over an inlet 82 of the cooling pipe 80. This is the environmental protection. Afterwards, the interface body 30 will be put into the inset 20 and also over the cooling pipe 80. Finally, the inset 20 and the part interface body 30 are fixed together (e. g., screwed) onto the part 10 of the housing.

Specifically, Fig. 4 (a) illustrates the part 10 of the housing for the battery cell as depicted in Fig. 1. Fixing elements 36a and 36b are arranged on the outer side of the part 10. Inside the housing, a pipe is arranged having an inlet 82 directed, with its longitudinal center axis, to the inner wall of the part 10. Upon implementing the interface system 1 into the part 10 of the housing, an approximately cup-shaped inset 20 is now inserted, at least partially, through a hole in the part 10, as depicted in Fig. 4 (b). The inset 20 has a first side 21 being located, after the described insertion of inset 20, inside the housing. A second side 22 of the inset 20 opposite to the first side 21 is accessible from outside the part 10 of the housing, i. e., from the left in Fig. 4 (b). The first side 21 of the inset 20 comprises a hole through which the inlet 82 of the pipe can be passed. A first seal 40 may be provided between the inner surface of the hole in the first side of inset 20 and the outer surface of inlet 82 to protect primary the interior of the housing against the outer environment and secondary also against leakage of a further seal 39 in the interface body 30 to the interior of the housing 12, the further seal 39 being arranged in the bore-hole 37 near the first end 31 of the interface body 30 (i. e., the further seal 39 is arranged on the inner surface of a portion of the bore-hole 37, wherein that portion extends to the first end 31 of the interface body 30). The first seal 40 may be an elastic seal. The second side 22 of the inset 20 may comprise a collar 24 overhanging radially with regard to a longitudinal center axis of the inset 20 in front of the outer wall of the part 10 of the housing in order to allow a fixation of the inset 20 to the part 10. A second seal 42 may also be provided between the collar 24 of inset 20 and the part 10. Specifically, the second seal 42 may protect the interior of the housing 12 against the environment.

Then, an interface body 30 is inserted into the inset 20, as illustrated in Fig. 4 (c). The interface body 30 has a first end 31, which includes the seal 39 that seals on a portion of the inner surface of the bore-hole 37 of the interface body 30 against the outer surface of pipe 82. A second end 32, which protrudes, when the interface system 1 is assembled, from the outer wall of the part 10. The interface body 30 comprises a bore-hole 37 leading from the first end 31 to the second end 32 of the interface body 30. The inlet 82 is slidably inserted, through the first end 31 of the interface body 30, into a portion of the bore-hole 37 that includes the seal 39, as already described above in the context of Fig. 1. The second end 32 is configured to be connected with an external hose or pipe that supplies coolant to or discharges coolant from the cooling system 84 of the battery cell 90 via the interface system 1. In order to facilitate, in an obvious way, the installation or connection of an external hose or pipe to the second end 32 of the interface body 30, the second end 32 of interface body 30 may comprise a circumferential bulge 38 on its outer surface.

In the embodiment shown in Fig. 4 (c), the interface body 30 further comprises a collar 34 overhanging radially with regard to a longitudinal center axis of the interface body 20 in front of the outer wall of the part 10 in order to allow a fixation of the interface body 30 to either the part 10, or to the collar 24 of the inset 20, or to both, the collar 24 of inset 20 and the part 10. In the embodiment depicted in Fig. 4 (c), the collar 34 of the interface body is fixed to both, the collar 24 of inset 20 and the part 10, wherein the same fixation elements 36a and 36b are employed for the fixation.

With the assembly shown in Fig. 4 (c), a mechanically decoupled system between the battery cell's 90 cooling system 84 / the cooling pipe 80 and the interface body 30 is established. If the costumer puts on the costumer-cooling-interface, no forces will be led on the cooling system 84 / the cooling pipe 80. Further, in case of a damaged seal on the interface body 30, the leaking coolant can flow out of the inset 20 through a small drain channel 50.

Also, inset 20 and interface body 30 may center up over the inlet 82 of the cooling pipe 80 for an optimal functioning of the sealing. Holes provided in the collars 24, 34 of the inset 20 and/or the interface body 30 may be sufficiently large in order to achieve an adequate tolerance compensation. In this context, the term "tolerance compensation" relates to a certain space that allows, if one wants to assemble more than two components to an assembly, to adjust the position of the single components relative to another, as each of the single components has its own manufacturing tolerance (e. g., variances in thickness, length, and the like) and also, a position tolerance for every single component is required upon assembling. In other words, the "tolerance compensation" is required to compensate for variances in the geometry of the single components due to their manufacture as well as for variances in their position upon assembly of these components.

### Reference signs

- 1: cooling interface system
- 10: part of a housing for a battery cell or battery module
- 12: housing for a battery cell or battery module
- 20: inset
- 21: first side of inset
- 22: second side of inset
- 24: collar of inset
- 30: interface body
- 31: first end of interface body
- 32, 32a, 32b: second end of interface body
- 34, 34a, 34b: collar of interface body
- 36a, 36b, 36c: screws for attaching the interface body to the housing
- 37: bore-hole through interface body
- 38: circumferential bulge
- 39: further seal
- 40: first seal
- 42: second seal
- 50: drain channel
- 70: virtual line to mark the part of a housing for a battery cell or battery module
- 80: pipe of an internal cooling system for the battery cell or battery module
- 82: inlet of the pipe of an internal cooling system
- 84: cooling system of the battery cell or battery module
- 90: battery cell

## Claims

1. An interface system (1) for a mechanical decoupling of an interface body (30) and a cooling pipe (80) of a cooling system (84) for a battery cell (90) or battery module of a vehicle, the interface system comprising:
a housing (12) for a battery cell (90) or a battery module;
an inset (20) having a first side (21) and a second side (22) opposite to the first side;
an interface body (30) having a first end (31) and a second end (32) and further having a bore-hole (37) with a first opening on the first end and a second opening on the second end;
wherein the housing (12) comprises a part (10) having a hole;
wherein the inset (20) comprises a recess in the second side (22) to receive the interface body (30);
wherein the interface body (30) is at least partially insertable into the inset (20) such that, when the interface body (30) is inserted into the inset (20), the first end of the interface body is located in the recess of the inset;
wherein the inset (20) is at least partially insertable, into the part (10) through the hole such that, when the inset is inserted into the part, the first side (21) of the inset is located inside the housing (12);
wherein the first side (21) of the inset (20) comprises a hole allowing access to the first opening of the bore-hole (37) of the interface body (30) when the interface body is inserted into the inset; and
wherein the first opening of the bore-hole (37) through the interface body (30) is adapted to receive, in a slidable manner, an inlet (82) of the cooling pipe (80), and the second opening of the bore-hole (37) is connectable, in a fluid-tight manner, with an external cooling supply or cooling discharge.

2. The interface system according to claim 1, wherein the inset (20) is inserted into the hole of the part (10) of the housing (12), and wherein the interface body (30) is inserted into the inset and over the inlet (82).

3. The interface system according to claim 1 or 2, wherein the inlet of the cooling pipe is led through the hole in the first side (21) of the inset (20) and at least partially inserted, in a slidable manner, through the first end (31) of the interface body (30) into the first opening of the bore-hole (37) of the interface body (30).

4. The interface system according to claim 3, wherein a first seal (40) is arranged between the inner surface of the hole in the first side (21) of the inset (20) and the outer surface of the inlet (82), and/or wherein a further seal (39) is arranged between the inner surface of the first opening in the first end (31) of the interface body (30) and the outer surface of the inlet (82).

5. The interface system according to claim 4, wherein the first seal (40) and/or the further seal (39) is an elastic seal.

6. The interface system according to any one of claims 1 to 5, wherein at least one drain channel (50) is formed between the inset (20) and the interface body (30).

7. The interface system according to any one of claims 1 to 6, wherein the inset (20) and the housing (12) are adapted such that in a state, wherein the inset is not fixed to the housing, the inset is moveable relative to the housing from the outside of the housing through the hole of the housing into the inside of the housing.

8. The interface system according to any one of claims 1 to 7, wherein the inset (20) comprises a second seal (42) abutting against an outer side of the housing (12), when the inset is inserted into the hole of the part (10) of the housing.

9. The interface system according to any one of claims 1 to 8, wherein the inset (20) is fixable to the part (10) of the housing (12).

10. The interface system according to claim 9, wherein the inset (20) comprises a first collar (24), wherein the first collar abuts, when the inset is inserted into the hole of the part (10) of the housing (12), against the outside wall of the part of the housing.

11. The interface system according to any one of claims 1 to 10, wherein the interface body (30) is fixable to the inset (20).

12. The interface system according to any one of claims 1 to 11, wherein the interface body (30) is fixable to the part (10) of the housing (12).

13. The interface system according to claim 12, wherein the interface body (30) comprises a second collar (34), wherein the second collar abuts, when the interface body is inserted into the inset (20) being inserted into the hole of the part (10) of the housing (12), against the outside wall of the part (10) of the housing (12) and/or against the first collar (24) of the inset (20).

14. The interface system according to claim 12 or 13, as long as depending on claim 9, wherein the interface body (30) and the inset (20) are both fixable to the part (10) of the housing (12) by the same fixing elements (36a, 36b, 36c).

15. A battery system, comprising the interface system (1) according to any one of claims 1 to 14.

## Patentansprüche

1. Ein Schnittstellensystem (1) zur mechanischen Entkopplung eines Schnittstellenkörpers (30) und eines Kühlrohrs (80) eines Kühlsystems (84) für eine Batteriezelle (90) oder ein Batteriemodul eines Fahrzeugs, wobei das Schnittstellensystem Folgendes aufweist:
ein Gehäuse (12) für eine Batteriezelle (90) oder ein Batteriemodul;
einen Einsatz (20), der eine erste Seite (21) und eine der ersten Seite gegenüberliegende zweite Seite (22) aufweist;
einen Schnittstellenkörper (30), der ein erstes Ende (31) und ein zweites Ende (32) aufweist und ferner eine Bohrung (37) mit einer ersten Öffnung auf dem ersten Ende und einer zweiten Öffnung auf dem zweiten Ende aufweist;
wobei das Gehäuse (12) ein Teil (10), das ein Loch aufweist, aufweist;
wobei der Einsatz (20) eine Ausnehmung in der zweiten Seite (22) zur Aufnahme des Schnittstellenkörpers (30) aufweist;
wobei der Schnittstellenkörper (30) zumindest teilweise derart in den Einsatz (20) einsetzbar ist, dass, wenn der Schnittstellenkörper (30) in den Einsatz (20) eingesetzt ist, das erste Ende des Schnittstellenkörpers in der Ausnehmung des Einsatzes angeordnet ist;
wobei der Einsatz (20) zumindest teilweise derart durch das Loch in das Teil (10) einsetzbar ist, dass, wenn der Einsatz in das Teil eingesetzt ist, die erste Seite (21) des Einsatzes im Gehäuse (12) angeordnet ist;
wobei die erste Seite (21) des Einsatzes (20) ein Loch aufweist, das den Zugang zur ersten Öffnung der Bohrung (37) des Schnittstellenkörpers (30) ermöglicht, wenn der Schnittstellenkörper in den Einsatz eingesetzt ist; und
wobei die erste Öffnung der Bohrung (37) durch den Schnittstellenkörper (30) angepasst ist, um einen Einlass (82) des Kühlrohrs (80) verschiebbar aufzunehmen, und die zweite Öffnung der Bohrung (37) fluiddicht mit einer externen Kühlzufuhr oder Kühlabfuhr verbindbar ist.

2. Das Schnittstellensystem nach Anspruch 1, wobei der Einsatz (20) in das Loch des Teils (10) des Gehäuses (12) eingesetzt ist und wobei der Schnittstellenkörper (30) in den Einsatz und über dem Einlass (82) eingesetzt ist.

3. Das Schnittstellensystem nach Anspruch 1 oder 2, wobei der Einlass des Kühlrohrs durch das Loch in der ersten Seite (21) des Einsatzes (20) geführt wird und zumindest teilweise durch das erste Ende (31) des Schnittstellenkörpers (30) in die erste Öffnung der Bohrung (37) des Schnittstellenkörpers (30) verschiebbar eingesetzt ist.

4. Das Schnittstellensystem nach Anspruch 3, wobei eine erste Dichtung (40) zwischen der Innenfläche des Lochs in der ersten Seite (21) des Einsatzes (20) und der Außenfläche des Einlasses (82) angeordnet ist und/oder wobei eine weitere Dichtung (39) zwischen der Innenfläche der ersten Öffnung im ersten Ende (31) des Schnittstellenkörpers (30) und der Außenfläche des Einlasses (82) angeordnet ist.

5. Das Schnittstellensystem nach Anspruch 4, wobei die erste Dichtung (40) und/oder die weitere Dichtung (39) eine elastische Dichtung ist.

6. Das Schnittstellensystem nach einem der Ansprüche 1 bis 5, wobei zumindest ein Ablaufkanal (50) zwischen dem Einsatz (20) und dem Schnittstellenkörper (30) ausgebildet ist.

7. Das Schnittstellensystem nach einem der Ansprüche 1 bis 6, wobei der Einsatz (20) und das Gehäuse (12) derart angepasst sind, dass in einem Zustand, in dem der Einsatz nicht am Gehäuse befestigt ist, der Einsatz bezüglich des Gehäuses von der Außenseite des Gehäuses durch das Loch des Gehäuse in das Innere des Gehäuses bewegbar ist.

8. Das Schnittstellensystem nach einem der Ansprüche 1 bis 7, wobei der Einsatz (20) eine zweite Dichtung (42) aufweist, die an einer Außenseite des Gehäuses (12) anliegt, wenn der Einsatz in das Loch des Teils (10) des Gehäuses eingesetzt ist.

9. Das Schnittstellensystem nach einem der Ansprüche 1 bis 8, wobei der Einsatz (20) am Teil (10) des Gehäuses (12) befestigbar ist.

10. Das Schnittstellensystem nach Anspruch 9, wobei der Einsatz (20) einen ersten Kragen (24) aufweist, wobei der erste Kragen an der Außenwand des Teils des Gehäuses anliegt, wenn der Einsatz in das Loch des Teils (10) des Gehäuses (12) eingesetzt ist.

11. Das Schnittstellensystem nach einem der Ansprüche 1 bis 10, wobei der Schnittstellenkörper (30) am Einsatz (20) befestigbar ist.

12. Das Schnittstellensystem nach einem der Ansprüche 1 bis 11, wobei der Schnittstellenkörper (30) am Teil (10) des Gehäuses (12) befestigbar ist.

13. Das Schnittstellensystem nach Anspruch 12, wobei der Schnittstellenkörper (30) einen zweiten Kragen (34) aufweist, wobei der zweite Kragen an der Außenwand des Teils (10) des Gehäuses (12) und/oder am ersten Kragen (24) des Einsatzes (20) anliegt, wenn der Schnittstellenkörper in den Einsatz (20) eingesetzt ist, welcher in das Loch des Teils (10) des Gehäuses (12) eingesetzt ist.

14. Das Schnittstellensystem nach Anspruch 12 oder 13, sofern diese von Anspruch 9 abhängig sind, wobei sowohl der Schnittstellenkörper (30) als auch der Einsatz (20) durch die gleichen Befestigungselemente (36a, 36b, 36c) am Teil (10) des Gehäuses (12) befestigbar sind.

15. Ein Batteriesystem, aufweisend das Schnittstellensystem (10) nach einem der Ansprüche 1 bis 14.

## Revendications

1. Système d'interface (1) pour un découplage mécanique d'un corps d'interface (30) et d'un tuyau de refroidissement (80) d'un système de refroidissement (84) pour un élément de batterie (90) ou un module de batterie d'un véhicule, le système d'interface comprenant :
un boîtier (12) pour un élément de batterie (90) ou un module de batterie ;
un insert (20) ayant un premier côté (21) et un second côté (22) opposé au premier côté ;
un corps d'interface (30) ayant une première extrémité (31) et une seconde extrémité (32) et ayant en outre un trou d'alésage (37) avec une première ouverture sur la première extrémité et une seconde ouverture sur la seconde extrémité ;
dans lequel le boîtier (12) comprend une partie (10) ayant un trou ;
dans lequel l'insert (20) comprend un évidement dans le second côté (22) pour recevoir le corps d'interface (30) ;
dans lequel le corps d'interface (30) peut être au moins partiellement inséré dans l'insert (20) de sorte que, lorsque le corps d'interface (30) est inséré dans l'insert (20), la première extrémité du corps d'interface est positionnée dans l'évidement de l'insert ;
dans lequel l'insert (20) peut être au moins partiellement inséré dans la partie (10) à travers le trou de sorte que, lorsque l'insert est inséré dans la partie, le premier côté (21) de l'insert est positionné à l'intérieur du boîtier (12) ;
dans lequel le premier côté (21) de l'insert (20) comprend un trou permettant l'accès à la première ouverture du trou d'alésage (37) du corps d'interface (30), lorsque le corps d'interface est inséré dans l'insert ; et
dans lequel la première ouverture du trou d'alésage (37) à travers le corps d'interface (30) est adaptée pour recevoir, d'une manière coulissante, une entrée (82) du tuyau de refroidissement (80) et la seconde ouverture du trou d'alésage (37) peut être raccordée, d'une manière étanche au fluide, avec une alimentation de refroidissement ou décharge de refroidissement externe.

2. Système d'interface selon la revendication 1, dans lequel l'insert (20) est inséré dans le trou de la partie (10) du boîtier (12), et dans lequel le corps d'interface (30) est inséré dans l'insert et sur l'entrée (82).

3. Système d'interface selon la revendication 1 ou 2, dans lequel l'entrée du tuyau de refroidissement est conduite à travers le trou dans le premier côté (21) de l'insert (20) et au moins partiellement insérée, d'une manière coulissante, à travers la première extrémité (31) du corps d'interface (30) dans la première ouverture du trou d'alésage (37) du corps d'interface (30).

4. Système d'interface selon la revendication 3, dans lequel un premier joint d'étanchéité (40) est agencé entre la surface interne du trou dans le premier côté (21) de l'insert (20) et la surface externe de l'entrée (82), et/ou dans lequel un joint d'étanchéité supplémentaire (39) est agencé entre la surface interne de la première ouverture dans la première extrémité (31) du corps d'interface (30) et la surface externe de l'entrée (82).

5. Système d'interface selon la revendication 4, dans lequel le premier joint d'étanchéité (40) et/ou le joint d'étanchéité supplémentaire (39) est un joint d'étanchéité élastique.

6. Système d'interface selon l'une quelconque des revendications 1 à 5, dans lequel au moins un canal de drain (50) est formé entre l'insert (20) et le corps d'interface (30).

7. Système d'interface selon l'une quelconque des revendications 1 à 6, dans lequel l'insert (20) et le boîtier (12) sont adaptés, de sorte que dans un état dans lequel l'insert n'est pas fixé au boîtier, l'insert est mobile par rapport au boîtier depuis l'extérieur du boîtier à travers le trou du boîtier dans l'intérieur du boîtier.

8. Système d'interface selon l'une quelconque des revendications 1 à 7, dans lequel l'insert (20) comprend un second joint d'étanchéité (42) venant en butée contre un côté externe du boîtier (12), lorsque l'insert est inséré dans le trou de la partie (10) du boîtier.

9. Système d'interface selon l'une quelconque des revendications 1 à 8, dans lequel l'insert (20) peut être fixé à la partie (10) du boîtier (12).

10. Système d'interface selon la revendication 9, dans lequel l'insert (20) comprend un premier collier (24), dans lequel le premier collier vient en butée, lorsque l'insert est inséré dans le trou de la partie (10) du boîtier (12), contre la paroi extérieure de la partie du boîtier.

11. Système d'interface selon l'une quelconque des revendications 1 à 10, dans lequel le corps d'interface (30) peut être fixé à l'insert (20).

12. Système d'interface selon l'une quelconque des revendications 1 à 11, dans lequel le corps d'interface (30) peut être fixé à la partie (10) du boîtier (12).

13. Système d'interface selon la revendication 12, dans lequel le corps d'interface (30) comprend un second collier (34), dans lequel le second collier vient en butée, lorsque le corps d'interface est inséré dans l'insert (20) qui est inséré dans le trou de la partie (10) du boîtier (12), contre la paroi extérieure de la partie (10) du boîtier (12) et/ou contre le premier collier (24) de l'insert (20).

14. Système d'interface selon la revendication 12 ou 13, tant qu'elle dépend de la revendication 9, dans lequel le corps d'interface (30) et l'insert (20) peuvent tous deux être fixés à la partie (10) du boîtier (12) par les mêmes éléments de fixation (36a, 36b, 36c).

15. Système de batterie comprenant le système d'interface (1) selon l'une quelconque des revendications 1 à 14.
